# EUROPÄISCHE PATENTSCHRIFT

(11) **EP 2 649 720 B1**
(45) Veröffentlichungstag und Bekanntmachung des Hinweises auf die Patenterteilung: **18.03.2020**
(21) Anmeldenummer: 11782438.3
(22) Anmeldetag: 16.11.2011
(51) Int. Cl.: H02P 1/18, F02N 11/08

(54) **SCHALTUNGSANORDNUNG FÜR EINE ELEKTRISCHE MASCHINE, VERFAHREN EINER SCHALTUNGSANORDNUNG, STARTVORRICHTUNG**
CIRCUIT ARRANGEMENT FOR AN ELECTRICAL MACHINE, METHOD FOR OPERATING A CIRCUIT ARRANGEMENT, STARTER DEVICE
CIRCUITERIE POUR UN MOTEUR ÉLECTRIQUE, PROCÉDÉ D'UNE CIRCUITERIE, DISPOSITIF DE DÉMARRAGE

(30) Priorität: 07.12.2010 DE 102010062535
(43) Veröffentlichungstag der Anmeldung: 16.10.2013
(73) Patentinhaber: SEG Automotive Germany GmbH, 70499 Stuttgart (DE)
(72) Erfinder: HARTMANN, Sven, 70439 Stuttgart (DE); PIRSCH, Roman, 73257 Koengen (DE); TUMBACK, Stefan, 70469 Stuttgart (DE); SENGEBUSCH, Falco, 70469 Stuttgart-Feuerbach (DE); VENKATASUBRAMANIAM, Balasubramaniam, 70597 Stuttgart (DE)
(74) Vertreter: Steinbauer, Florian
(86) Internationale Anmeldenummer: PCT/EP2011/070198
(87) Internationale Veröffentlichungsnummer: WO 2012/076302

(56) Entgegenhaltungen:
- EP-A2- 2 128 426
- EP-A2- 2 172 644
- WO-A1-2008/009731
- DE-A1-102008 040 191
- DE-A1-102009 047 635
- GB-A- 1 303 437

## Beschreibung

### Stand der Technik

Die Erfindung bezieht sich auf eine Schaltungsanordnung für eine elektrische Maschine, insbesondere für einen Startermotor zum Starten einer Brennkraftmaschine, in einem Kraftfahrzeug, mit einer Strombegrenzungsvorrichtung zum Begrenzen eines Einschaltstroms der elektrischen Maschine. Die Erfindung bezieht sich auch auf ein Verfahren zum Betreiben einer insbesondere vorher beschriebenen Schaltungsanordnung, für eine elektrische Maschine, insbesondere für einen Startermotor zum Starten einer Brennkraftmaschine von einem Kraftfahrzeug, mit einer Strombegrenzungsvorrichtung zum Begrenzen eines Einschaltstroms der elektrischen Maschine. Die Erfindung bezieht sich ferner auf eine Startvorrichtung zum Starten einer Brennkraftmaschine in einem Kraftfahrzeug, mit einer, oben beschriebenen Schaltungsanordnung, mit einem Startermotor und mit einer Strombegrenzungsvorrichtung zum Begrenzen eines Einschaltstroms des Startermotors.

Es sind Startvorrichtungen mit einem Startermotor zum Starten von einer Brennkraftmaschine bekannt. Es ist bekannt zum Einspuren den Strom eines Startermotors beispielsweise durch eine Einzugswicklung eines Einspurrelais zu begrenzen, um ein leichtes Andrehen des Startermotors zu erzeugen und somit verschleißfreier ein Starterritzel des Startermotors in einen Zahnkranz der Brennkraftmaschine einzuspuren.

Bei Start-Stopp-Systemen die zunehmend im Einsatz von Kraftfahrzeugen vorgesehen sind, wird ein hoher Spannungseinbruch im Bordnetz grundsätzlich durch den Einsatz der elektrischen Maschine zum Starten der Brennkraftmaschine verursacht. Dies ist bei einem Kaltstart eines Fahrzeugs unproblematisch. Bei einem Start-Stopp-Betrieb beeinträchtigt der Spannungseinbruch weitere bereits aktive elektrische Geräte, die entweder kurz ausgeschaltet werden oder zurückgesetzt werden, was von Fahrzeuginsassen als störend empfunden wird. Um den Spannungseinbruch zu minimieren, ist eine Strombegrenzungsvorrichtung für den Startermotor vorgesehen, über die der Startermotor angedreht wird und anschließend die Strombegrenzungsvorrichtung überbrückt wird.

Die DE 10 2008 040 191 A1 beschreibt einen Starter für eine Brennkraftmaschine mit einem Startmotor zum zweistufigen Einspuren eines Starterritzels in einen Zahnkranz der Brennkraftmaschine, wobei der Startermotor in einer ersten Stufe über einen Vorwiderstand mit einem reduzierten Motorstrom und in einer zweiten Stufe mit seinem vollen Hauptstrom gespeist wird. Der Vorwiderstand ist in eine zweistufige Schaltvorrichtung integriert. Die Schaltvorrichtung wirkt mit zwei unterschiedlichen Federkräften gegen Anschlusstücke.

Die WO 2008/009731 A1 beschreibt eine Spulenanordnung mit einem rohrförmigen Spulenträger eines als zweistufiges Einrückrelais ausgebildeten elektromagnetischen Antriebs. Die Spulenanordnung umfasst eine Halte- und eine Einzugswicklung mit einer speziellen Anordnung der Halte- und Einzugswicklung auf dem Spulenträger.

Die EP 2 128 426 A2 beschreibt einen Starter mit einem Startermotor und einem daran angeordneten Einspurritzel, das Rotationskräfte auf einen Zahnkranz einer Brennkraftmaschine überträgt, mit einem ersten elektromagnetischen Schalter, der die Starterschaltung mit einem elektrischen Strom von der Batterie zum Startermotor bezüglich eines ersten Kontaktpunkts ein- und ausschaltet, mit einem Widerstand, der in Serie zum ersten Kontaktpunkt in Serie geschaltet ist und mit einem zweiten elektromagnetischen Schalter, der einen zweiten Kontaktpunkt öffnet, der parallel zum Widerstand geschaltet ist und einer Steuerung, die über eine einstellbare Zeitdauer den elektromagnetischen Schalter ansteuert, um die Kontaktpunkte zu öffnen und zu schließen.

Die DE 10 2009 047 635 A1 beschreibt eine Schaltungsanordnung für einen Starter mit einem Startermotor und einer Schaltvorrichtung mit einer Einzugs- und Haltewicklung, sowie mit einer Strombegrenzungsvorrichtung und einer Überbrückungsvorrichtung. Die Strombegrenzungsvorrichtung ist in Reihe zur Einzugswicklung der Schaltvorrichtung geschaltet.

Die GB 1 303 437 beschreibt eine Startvorrichtung für eine Brennkraftmaschine mit zwei Schaltvorrichtungen. Die erste Schaltvorrichtung mit einer in Reihe geschalteten Strombegrenzungsvorrichtung steuert die zweite Schaltvorrichtung mit der Wirkung einer Überbrückungsvorrichtung in Form einer Kaskade an.

Die EP 2 172 644 offenbart eine Startvorrichtung, bei der ein erstes Relais eine Spule zur Betätigung der Einspurvorrichtung schaltet und der Strom zum Motor alternativ über einen Transistor und ein zweites Relais geschaltet wird, wobei das Relais bei höherem Strom als der Transistor anspricht.

Es ist Aufgabe der Erfindung, eine Schaltungsanordnung, ein Verfahren zum Betreiben derselben und eine Startvorrichtung der Eingangs beschriebenen Art derart weiterzubilden, dass ein Spannungseinbruch bei einem Startvorgang einer Brennkraftmaschine mittels der elektrischen Maschine möglichst sicher vermieden wird.

### Offenbarung der Erfindung

Erfindungsgemäß wird die Aufgabe durch den Gegenstand des Patentanspruchs 1 gelöst. Die abhängigen Ansprüche definieren bevorzugte Weiterbildungen der Erfindung.

Es ist ein Gedanke der Erfindung, die Schaltungsanordnung mit einer Zusatzbeschaltung aus aktiven und passiven Bauelementen derart zu ergänzen und anzuordnen, dass der Anlaufstrom der elektrischen Maschine und damit der Spannungseinbruch im Bordnetz besser vermieden wird. Ein Gedanke der Erfindung ist es deshalb, eine Anlaufstrombegrenzung für eine elektrische Maschine vorzusehen, die sicher bei einem Start einer Brennkraftmaschine eingesetzt wird und auch sicher überbrückt wird, um den Startermotor mit einer maximalen Spannung zu beaufschlagen. Damit die Überbrückungsvorrichtung sicher schaltet und unabhängig von anderen aktiven / oder passiven Bauelementen schaltet, ist bevorzugt die Überbrückungsvorrichtung an ein hohes Potential einer Spannungsquelle schaltbar. Es wird somit vermieden, dass an der Überbrückungsvorrichtung ein zu geringes Potential, beispielsweise im Bereich von 2-4 Volt, abfällt, das ein sicheres Schalten über einen großen Betriebsbereich beeinträchtigen würde. Die erfindungsgemäße Schaltungsanordnung sieht deshalb vor, dass die Überbrückungsvorrichtung somit direkt an der Spannungsquelle in einem Stromkreis anliegt und gegebenenfalls in Serie zur elektrischen Maschine schaltbar ist.

Gemäß einer bevorzugten Ausführungsform ist die Schaltungsanordnung mit einer ersten Schaltvorrichtung mit einer Einzelfunktion und mit einer zweiten Schaltvorrichtung mit einer Doppelfunktion ausgebildet, wobei insbesondere die zweite Schaltvorrichtung als Stromkreisschaltvorrichtung und als mechanische Einspurvorrichtung ausgebildet ist. Die Strombegrenzungsvorrichtung umfasst einen den Einschaltstrom der elektrischen Maschine strombegrenzenden Anlaufwiderstand oder Vorwiderstand. Dies hat den Vorteil, dass bei einer gegebenen Anzahl von aktiven Bauelementen als Schaltvorrichtungen, die bevorzugt als Relais ausgebildet sind, diese je nach geforderten Vorgaben und Anforderungen entsprechend mit Funktionen vorgesehen werden können. Dabei können die einzelnen Funktionen verschieden zugeteilt werden und verschieden ausgeführt werden, wie im Folgenden erläutert und beschrieben wird. Die erste und die zweite Schaltvorrichtung können zwangsweise oder aufgrund elektronischer Bauteile und aufgrund der Schaltungsanordnung nacheinander oder gleichzeitig bestromt werden. Dabei kann die Bestromungsreihenfolge der ersten und der zweiten Schaltungsvorrichtung entsprechend der Bezeichung oder umgekehrt unabhängig von der Ausführungsform vorgesehen sein.

Erfindungsgemäß ist die zweite Schaltvorrichtung als Überbrückungsvorrichtung ausgebildet. Dies hat den Vorteil für eine Anwendung, wenn beispielsweise der Startermotor erst einmal beschleunigt werden soll, um in einen auslaufenden Zahnkranz einer drehenden Brennkraftmaschine einzuspuren und danach mittels der zweiten Schaltvorrichtung eingespurt wird und der Startermotor anschließend zum Starten mit einem maximalen Strom und Spannung beaufschlagt wird, um die Brennkraftmaschine wieder zu starten.

Damit die Überbrückungsvorrichtung noch sicherer über einen weiten Betriebsbereich, das heißt bei niedrigen und auch bei hohen Betriebstemperaturen, einwandfrei arbeitet, ist bevorzugt die Überbrückungsvorrichtung mit einer Spannung schaltbar, die insbesondere über der elektrischen Maschine abfällt. Somit ist die Überbrückungsvorrichtung nicht mehr ein Spannungsteiler in einem Niedervoltbereich, wie bisher bekannt. Die Überbrückungsvorrichtung ist schaltbar mittels eines gesamten Potential der Spannungsquelle.

Gemäß einer die Erfindung weiterbildenden Ausführungsform ist die zweite Schaltvorrichtung zum Schließen eines Stromkreises mit der Strombegrenzungsvorrichtung für den Anlaufstrom angeordnet, wobei verfahrensmäßig zuerst eingespurt wird. Somit wird der Startermotor zuerst über die zweite Schaltvorrichtung bestromt, anschließend wird der Startermotor mit einer höheren Spannung beaufschlagt über eine Spannung von der Stromquelle, bei der ein Vorwiderstand der Überbrückungsvorrichtung dazwischen geschaltet ist. In einem dritten Schritt wird der Vorwiderstand durch Schalter der ersten Schaltvorrichtung überbrückt und der Startermotor mit dem vollen Potential der Startvorrichtung beaufschlagt.

Um die zeitliche Verzögerung zur Überwindung eines Spannungseinbruchs möglichst kurz zu halten und genau einzustellen, ist gemäß einer weiter bevorzugten Ausführungsform die Schaltungsanordnung mit einer Verzögerungsvorrichtung, insbesondere mit einer Schaltvorrichtung, vorzugsweise einem anwendungsspezifischen Chip ausgebildet, besonders bevorzugt ist eine mikrocomputergesteuerte Verzögerungsvorrichtung im Stromkreis der Schaltungsanordnung vorgesehen.

Um den funktionellen Ablauf möglichst sicher zu gestalten, ist die erste Schaltvorrichtung von der zweiten Schaltvorrichtung zwangsgesteuert oder insbesondere umgekehrt geschaltet, besonders bevorzugt sind die erste und die zweite Schaltvorrichtung mittels eines Ein- und Ausschalters ansteuerbar. Der Ein- und Ausschalter ist beispielsweise ein elektronischer Schalter, der mit einem Schlüsselschalter oder einem Startknopf verbunden ist und solange geschlossen ist, wie der Startvorgang ausgeführt werden soll. Der Ein- und Ausschalter kann von einer Start-Stopp-Steuerung angesteuert werden. Das Schalten als Zwangssteuerung hat den Vorteil, dass in einem großen Betriebsbereich die Schaltungsanordnung ausfallsicher arbeitet.

Gemäß einer die Erfindung weiterbildenden Ausführung ist mit der Strombegrenzungsvorrichtung, das heißt einem Vorwiderstand der Einfluss auf ein induktives Verhalten der Überbrückungsvorrichtung, insbesondere der ersten Schaltvorrichtung einstellbar.

Über den Vorwiderstand lässt sich somit die Einschaltdauer der Überbrückungsvorrichtung einstellen.

Um die Schaltungsanordnung möglichst unabhängig vom Startermotor auszubilden und somit ein Baukastensystem zur Verfügung zu stellen, sind die erste Schaltvorrichtung und/oder die zweite Schaltvorrichtung und/oder die Strombegrenzungsvorrichtung zum Startermotor als separat anordenbare bauliche Einheit ausgebildet. Somit lassen sich die Schaltvorrichtungen und die Strombegrenzungsvorrichtung individuell für jeden geforderten Anwendungsfall, beispielsweise als Baukastensystem, zusammenstellen und verschalten.

Um die Funktionssicherheit zu erhöhen, ist bevorzugt eine Stromrückflussverhinderungsvorrichtung, insbesondere eine Diode, im Stromkreis der Überbrückungsvorrichtung geschaltet. Somit wird verhindert, dass aufgrund von Induktion beim Ausschalten der elektrischen Maschine, die erste und/oder zweite Schaltvorrichtung wieder aktiviert wird und die elektrische Maschine bestromt wird.

Um die Einschaltverzögerungen genau zu definieren und somit einen möglichst verschleißfreien Betrieb zu gewährleisten, sind bevorzugt Einschaltverzögerungen der Schaltvorrichtungen durch eine geeignete Auswahl von Induktivitäten und einer Ohmigkeit der Schaltvorrichtungen, die insbesondere als Schaltrelais ausgebildet sind, einstellbar.

Um die Überbrückungsvorrichtung möglichst sicher mit einem möglichst hohen Potential zu schalten, ist bevorzugt die Überbrückungsvorrichtung direkt an Masse schaltbar, insbesondere in Reihe zu einer Einzugswicklung der zweiten Schaltvorrichtung. Alternativ ist besonders bevorzugt die Überbrückungsvorrichtung über eine dritte Schaltvorrichtung mit Einzelfunktion zwangsgesteuert als erste Schaltvorrichtung mit Einzelfunktion geschaltet. Die Überbrückungsvorrichtung ist somit im Stromkreis von übrigen aktiven Bauelementen entkoppelt und somit sehr sicher schaltbar.

Die Aufgabe wird auch durch ein Verfahren zum Betreiben einer Schaltungsanordnung gelöst, wobei der Einschaltstrom der elektrischen Maschine beim Anlaufen mittels der Strombegrenzungsvorrichtung begrenzt und anschließend die Strombegrenzungsvorrichtung mit der Überbrückungsvorrichtung überbrückt wird, wobei die Überbrückungsvorrichtung mittels eines hohen Potentials einer Spannungsquelle, insbesondere von der Spannungsquelle der elektrischen Maschine direkt beaufschlagt wird.

Dies hat wie oben bereits erläutert den Vorteil, dass die Überbrückungsvorrichtung sicher über einen weiten Betriebsbereich arbeitet und nicht verschiedene bzw. zu niedrige Spannungen an der Überbrückungsvorrichtung auftreten, die ein sicheres Schalten gefährden würden. Es treten somit höhere Spannungen im Bereich von 9-12 Volt an der Überbrückungsvorrichtung im Gegensatz zu bekannten Schaltungsanordnungen mit Überbrückungsvorrichtungen auf.

Die Aufgabe wird auch durch eine Startvorrichtung zum Starten einer Brennkraftmaschine dadurch gelöst, dass die Startvorrichtung eine Überbrückungsvorrichtung zum Überbrücken der Strombegrenzungsvorrichtung aufweist, wobei die Überbrückungsvorrichtung mittels eines hohen Potentials einer Spannungsquelle schaltbar ist. Eine solche Startvorrichtung ist sicher über einen weiten Temperaturbetriebsbereich einsetzbar und sichert somit aufgrund einer stabilen Potentialspannung ein stabiles Schaltverhalten. Die Spannung differierte in den bisher vorgeschlagenen Lösungen während eines Startprozesses, beziehungsweise war so weit abgesenkt, dass ein sicheres Schalten der Überbrückungsvorrichtung nicht vollständig gewährleistet werden konnte.

Es versteht sich, dass die vorstehen genannten und nachstehend noch zu erläuternden Merkmale nicht nur in der jeweils angegebenen Kombination, sondern auch in anderen Kombinationen verwendbar sind.

### Kurze Beschreibung der Zeichnungen

Die Erfindung wird im Folgenden unter Bezugnahme auf die Zeichnungen näher erläutert. Es zeigen:
- Fig. 1: einen schematischen Schaltplan einer Schaltungsanordnung gemäß einer Ausführungsform der Erfindung,
- Fig. 2: einen schematischen Schaltplan einer Schaltungsanordnung gemäß einer nicht erfindungsgemäßen Ausführungsform,
- Fig. 3: einen schematischen Schaltplan einer weiteren Schaltungsanordnung gemäß einer Ausführungsform der Erfindung,
- Fig. 4: einen schematischen Schaltplan einer nicht erfindungsgemäßen Schaltungsanordnung,
- Fig. 5: einen schematischen Schaltplan einer nicht erfindungsgemäßen Schaltungsanordnung,
- Fig. 6: einen schematischen Schaltplan einer nicht erfindungsgemäßen Schaltungsanordnung,
- Fig. 7: einen schematischen Schaltplan einer nicht erfindungsgemäßen Schaltungsanordnung und
- Fig. 8: einen schematischen Schaltplan einer nicht erfindungsgemäßen Schaltungsanordnung.

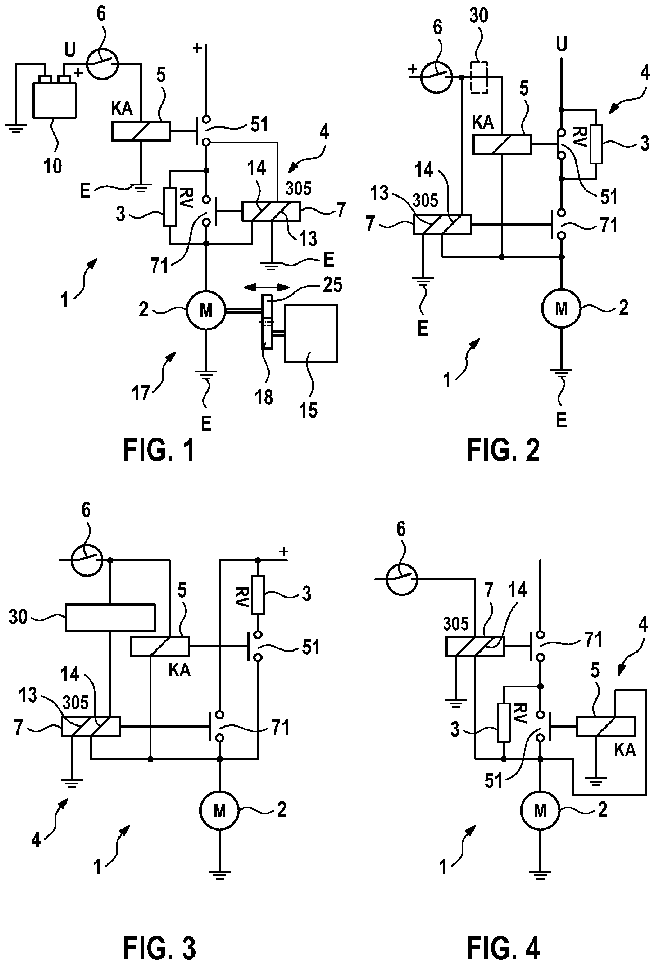

Die Fig. 1 zeigt einen schematischen Schaltplan einer Schaltungsanordnung 1 mit einer elektrischen Maschine 2. Die Schaltungsanordnung 1 bildet mit der elektrischen Maschine 2 eine Startvorrichtung 17 zum Starten einer Brennkraftmaschine 15. Die elektrische Maschine ist hierfür ein Startermotor 2.

Die Schaltungsanordnung 1 umfasst einen Vorwiderstand 3 als Strombegrenzungsvorrichtung und eine den Vorwiderstand 3 überbrückende Vorrichtung 4. Die Überbrückungsvorrichtung 4 ist eine Schaltvorrichtung, die vorzugsweise aufgrund von sehr hohen Strömen, bevorzugt als Relais ausgebildet ist.

Die Schaltungsanordnung 1 umfasst zwei Relais, eine erste Schaltvorrichtung 5 und eine zweite Schaltvorrichtung 7. Die erste Schaltvorrichtung 5 wird über einen Schalter 6 angesteuert. Der Schalter 6 ist beispielsweise ein Zündschlüsselschalter oder ein elektronischer Schalter, der mit einem Startknopf verbunden ist oder ein Schalter, der von einer Start-Stopp-Steuerung aktiviert und deaktiviert wird. Die erste Schaltvorrichtung 5 schließt einen Schaltkontakt 51, um die elektrische Maschine 2 und die zweite Schaltvorrichtung 7 mit Spannung zu beaufschlagen. Das erste Relais 5 wird also zuerst bestromt und geschlossen und anschließend wird das zweite Relais 7 bestromt und geschlossen.

Die erste Schaltvorrichtung 5 ist bevorzugt über das gesamte Potential einer Spannungsquelle, das heißt einer Batterie 10, geschaltet. Die erste Schaltvorrichtung 5 hängt also minusseitig am Massepotential E und pluspolseitig am Potential U.

Die zweite Schaltvorrichtung 7 besitzt bevorzugt eine Doppelfunktion. Sie ist einmal eine Stromkreisschaltvorrichtung mit einem Schaltkontakt 71 und ferner ist sie eine mechanische Einspurvorrichtung, um ein Starterritzel 25 in einen Zahnkranz 18 der Brennkraftmaschine 15 ein- und auszuspuren. Die zweite Schaltvorrichtung 7 umfasst hochohmige Einzugswicklung 14 und eine niederohmige Haltewicklung 13. Die Einzugs- und die Haltewicklung ist zwischen dem maximalen Potential U der Batterie 10 und dem Massepotential E geschaltet. Die Einzugswicklung 14 ist in Reihe zum Startermotor 2 geschaltet. Somit wird der Startermotor 2 leicht angedreht, um einen Einspurvorgang vom Starterritzel 25 in den Zahnkranz 18 verschleißfreier auszuführen.

Beim Schließen des Schaltkontakts 51 wird der Startermotor 2 auch über den in Reihe geschalteten Vorwiderstand 3 bestromt. Somit ist der Startermotor 2 auf eine Drehzahl beschleunigbar, wenn beispielsweise aufgrund eines Start-Stopp-Betriebs der Startermotor 2 beschleunigt werden sollte, um in einen sich drehenden auslaufenden Zahnkranz einer Brennkraftmaschine 15 einzuspuren. Hierfür wird optional die zweite Schaltvorrichtung 7 von einer nicht dargestellten Steuerung zeitgenau angesteuert, die aus Gründen der Vereinfachung weggelassen worden ist.

Sobald die zweite Schaltvorrichtung 7 das Starterritzel 25 eingespurt hat, wird ein zweiter Schaltkontakt 71 geschlossen, der somit den Vorwiderstand 3 überbrückt. Der Startermotor 2, der mit einer geringeren Spannung anfangs beaufschlagt worden ist, wird nun mit einem maximalen Potential U der Batterie 10 beaufschlagt. Der Spannungseinbruch ist in diesem Fall minimiert oder aufgehoben, da der Startermotor bereits angelaufen ist und eine entsprechende Drehzahl erreicht hat.

Die zweite Schaltvorrichtung 7 als Überbrückungsvorrichtung 4 schaltet sicher, da die Schaltvorrichtung direkt am hohen, maximalen Potential U der Batterie 10 geschaltet ist. Somit ist eine stabile Funktion der erfingungsgemäßen Schaltungsanordnung gewährleistet.

Die Fig. 2 zeigt eine alternative nicht erfindungsgemäße Schaltungsanordnung, bei der die erste Schaltvorrichtung 5 mit einer Einzelfunktion im Gegensatz zur Fig. 1 als Überbrückungsvorrichtung 4 der Strombegrenzungsvorrichtung 3 ausgebildet ist. Der Schaltkontakt 51 überbrückt somit den Vorwiderstand 3, wenn dieser geschlossen wird. Die zweite Schaltvorrichtung 7 ist herkömmlich geschaltet, indem sie über die Einzugswicklung 14 den Startermotor 2 andreht und über den Schaltkontakt 71 einen Stromkreis schließt, sodass der Startermotor mit einer höheren Spannung, unter Umgehung der Einzugswicklung 14, beaufschlagt wird. Erfindungsgemäß ist somit zusätzlich die Strombegrenzungsvorrichtung 3 geschaltet und in Reihe zum Startermotor 2 und parallel zur Einzugswicklung 14 ist die erste Schaltvorrichtung 5 geschaltet. Die erste und die zweite Schaltvorrichtung 5, 7 werden gemeinsam mittels des Schalters 6 aktiviert und deaktiviert. Optional, wenn aufgrund der Induktivität der ersten Schaltvorrichtung 5 diese zu schnell schaltet, kann eine Verzögerungsvorrichtung 30 der ersten Schaltvorrichtung 5 vorgeschaltet sein. Mittels der Verzögerungsvorrichtung 30 ist einstellbar, dass der Startermotor 2 ausreichend bestromt wird, um Spannungseinbrüche zu verhindern, wenn der Startermotor 2 mit der maximalen Spannung, einem Potential U, beaufschlagt wird.

Die Aufgabe der Verzögerungseinrichtung kann auch durch eine genau festgelegte Induktivität der ersten Schaltvorrichtung 5 erzeugt werden, die die Schaltzeit des Schaltkontakts 51 festlegt. Um jedoch beispielsweise ein temperaturabhängiges Verhalten der ersten Schaltvorrichtung 5 zu kompensieren, kann eine Verzögerungsvorrichtung 30 vorgesehen sein.

Die Fig. 3 zeigt eine alternative, erfindungsgemäße Ausführungsform der Schaltungsanordnung 1. Bei dieser Schaltungsanordnung 1 schließt der Schaltkontakt 51 der ersten Schaltvorrichtung 5 einen Stromkreis des Startermotors 2 mit dem Vorwiderstand 3 zuerst. Die erste Schaltvorrichtung 5 ist in Serie zum Startermotor 2 vorgeschaltet und parallel zur Einzugswicklung 14 der zweiten Schaltvorrichtung 7. Die zweite Schaltvorrichtung 7 fungiert in zweiter Funktion neben der Einspurfunktion als Überbrückungsvorrichtung 4 und überbrückt somit den geschlossenen Stromkreis des Vorwiderstandes 3 am Schaltkontakt 71.

Um die Überbrückung des Vorwiderstandes 3 genau einzustellen und somit den Spannungseinbruch genau zu minimieren, ist eine Verzögerungsvorrichtung 30 der zweiten Schaltvorrichtung 7 vorgeschaltet. Mit dieser Schaltungsanordnung lässt sich, wie bei einer Schaltungsanordnung gemäß Fig. 1 der Startermotor 2 beispielsweise zum Einspuren in einen sich drehenden, auslaufenden Zahnkranz 18 einer Brennkraftmaschine 15 auf eine Drehzahl beschleunigen und mittels einer entsprechenden Steuerung zur gewünschten bzw. zur errechneten Zeit das Starterritzel 25 durch Ansteuerung der Schaltvorrichtung 7 einspuren.

Optional kann zur Ansteuerung der ersten Schaltvorrichtung 5 eine weitere Steuerung vorgeschaltet sein, um diese beispielsweise bei einem Kaltstart anzusteuern bzw. deaktivieren, wenn ein Spannungseinbruch unerheblich ist.

Die Fig. 4 zeigt schematisch den Schaltplan einer nicht erfindungsgemäßen Schaltungsanordnung 1. Die Einspurwicklung 14 ist, wie in den Schaltungsanordnungen der Fig. 1 bis 3, in Reihe zum Startermotor 2 geschaltet. Die erste Schaltvorrichtung 5 ist in dieser Ausführungsform als Überbrückungsvorrichtung 4 des Vorwiderstandes 3 angeordnet und parallel zum Startermotor in Reihe zur Einzugswicklung 14 und dem Vorwiderstand 3 geschaltet. Der Schaltkontakt 71, der von der zweiten Schaltvorrichtung 7 geschlossen wird, ist somit der Hauptschalter für den Startermotor 2, wie in der Fig. 2. Eine verzögerte Schaltzeit wird über die Induktivität der ersten Schaltvorrichtung 5 eingestellt. Das Relais 7 wird zuerst geschlossen und anschließend wird das Relais 5 bestromt und somit geschlossen.

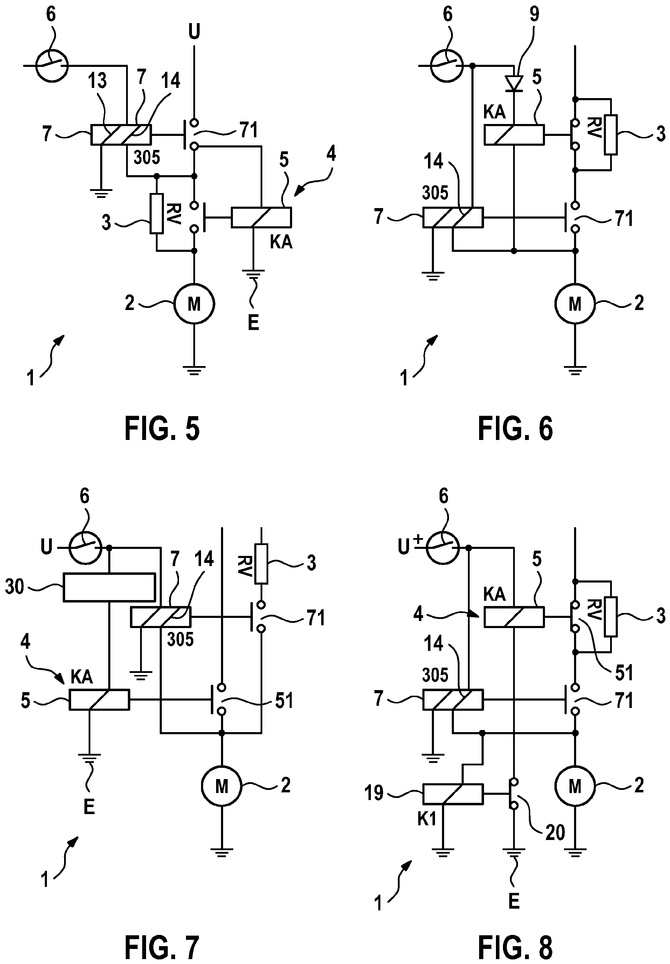

Die Fig. 5 zeigt einen schematischen Schaltplan einer nicht erfindungsgemäßen Schaltungsanordnung 1. Bei dieser Schaltungsanordnung ist die Überbrückungsvorrichtung 4, wie in der Fig. 4, die erste Schaltvorrichtung 5 mit dem Unterschied, dass die erste Schaltvorrichtung 5 direkt am Potential U anliegt und somit über das vollständige Potential der in Fig. 1 gezeigten Batterie 10 schaltbar ist. Somit wird eine noch stabilere und sichere Schaltung der Überbrückungsvorrichtung 4 gewährleistet. Der Vorwiderstand 3 ist in Reihe zur Einzugswicklung 14 der zweiten Schaltvorrichtung 7 geschaltet. Der Schaltkontakt 71 der zweiten Schaltvorrichtung 7 dient, wie in der vierten Schaltungsanordnung 1 als Hauptschalter für den Startermotor 2. Er bestromt somit beim Schließen des Schaltkontakts 71 gleichzeitig den Startermotor 2 über den vorgeschalteten Vorwiderstand 3 und die erste Schaltvorrichtung 5. Zeitlich verzögert überbrückt die erste Schaltvorrichtung 5 als Überbrückungsvorrichtung 4 den Vorwiderstand 3. Somit wird ein Spannungseinbruch wie gewünscht, insbesondere für einen Start-Stopp-Betrieb, vermieden. Der Ablauf der Schaltzustände ist abhängig vom Schließen des Schalters 6 zwangsgesteuert. Das Relais 7, die zweite Schaltvorrichtung 7, wird also zuerst bestromt und schließt den Schaltkontakt 71 und dann wird das Relais 5 bestromt, die erste Schaltvorrichtung 5, die dann den Schaltkontakt 51 schließt.

Die Fig. 6 zeigt eine weitere Ausbildung der nicht erfindungsgemäßen Ausführungsform gemäß Figur 2. Der Schaltungsanordnung 1 ist im Unterschied zur Schaltungsanordnung der Fig. 2 mit einer Diode 9 als Stromrückflussverhinderungsvorrichtung der ersten Schaltvorrichtung 5 ausgebildet. Somit wird verhindert, dass beim Ausschalten des Startermotors 2 aufgrund von den Induktivitäten der ersten und zweiten Schaltvorrichtung 5, 7 diese nicht wieder bestromt werden, hier insbesondere die Einzugswicklung 14. Der Schaltkontakt 71 schließt nicht wieder, was anderenfalls zu Fehlfunktionen des Startermotors 2 und somit zu einem erhöhten Verschleiß oder einre Beschädigung der Startervorrichtung führen würde.

Die Fig. 7 zeigt eine alternative nicht erfindungsgemäße Schaltungsanordnung entsprechend der Fig. 3. Hier ist auch eine Verzögerungsvorrichtung 30 vorgesehen, um einen Hauptschalter eines Hauptstromkreises des Startermotors verzögert zu schließen. Der Hauptschalter ist hier der Schaltkontakt 51 der ersten Schaltvorrichtung 5, die wie in der Fig. 1, 4 und 5 über das maximale Potential beaufschlagt wird. Die erste Schaltvorrichtung 5 ist somit die Überbrückungsvorrichtung 4, die zweite Schaltungsvorrichtung 7 dreht den Startermotor 2 über die Einzugswicklung 14 kurz an und bestromt den Startermotor 2 weiter über den Vorwiderstand 3 durch Schließen des Schaltkontakts 71.

Die Fig. 8 zeigt eine nicht erfindungsgemäße Schaltungsanordnung 1 mit einer dritten Schaltvorrichtung 19, die parallel zum Startermotor 2 und in Serie zur Einzugswicklung 14 der zweiten Schaltvorrichtung 7 geschaltet ist. Die zweite Schaltvorrichtung 7 schließt mit dem Schaltkontakt 71 den Hauptstromkreis des Startermotors 2. Die dritte Schaltvorrichtung 19 schließt einen Schaltkontakt 20, der einen Stromkreis der ersten Schaltvorrichtung 5 schließt, sodass die erste Schaltvorrichtung 5 direkt am Potential der Batterie 10 hängt. Die erste Schaltvorrichtung 5 ist somit zwangsgesteuert über die dritte Schaltvorrichtung 19. Die erste Schaltvorrichtung 5 ist als Überbrückungsvorrichtung 4 zur Überbrückung des Vorwiderstandes 3 angeordnet. Mit dem Schalter 6 wird die Schaltungsanordnung 1 wie bekannt gesteuert. Die dritte Schaltvorrichtung 19 ist parallel zum Startermotor 2 geschaltet. Alle erfindungsgemäßen Schaltungsanordnungen beschreiben stabil schaltende Schaltvorrichtungen zur Überbrückung einer Strombegrenzungsvorrichtung der elektrischen Maschine. Alle Figuren zeigen lediglich schematische nicht maßstabsgerechte Darstellungen. Im Übrigen wird insbesondere auf die zeichnerische Darstellungen für die Erfindung als wesentlich verwiesen.

## Patentansprüche

1. Schaltungsanordnung (1) für eine elektrische Maschine (2), insbesondere für einen Startermotor (2) zum Starten einer Brennkraftmaschine (15), in einem Kraftfahrzeug,
mit einer Strombegrenzungsvorrichtung (3) zum Begrenzen eines Einschaltstroms der elektrischen Maschine (2),
mit einer ersten Schaltvorrichtung (5) mit einer Einzelfunktion, dadurchgekennzeichnet dass die Einzelfunktion einen Schaltkontakt (51) zum Schließen eines Stromkreises der elektrischen Maschine (2) mit der Strombegrenzungsvorrichtung (3) umfasst, mit einer zweiten Schaltvorrichtung (7) mit Doppelfunktion, wobei die Doppelfunktion eine Stromkreisschaltvorrichtung und eine mechanische Einspurvorrichtung umfasst
mit einer Überbrückungsvorrichtung (4) zum Überbrücken der Strombegrenzungsvorrichtung (3), die als die Stromkreisschaltvorrichtung der zweiten Schaltvorrichtung (7) gebildet ist,
wobei die Überbrückungsvorrichtung (4) direkt an ein hohes Potential einer Spannungsquelle (10) schaltbar ist.

2. Schaltungsanordnung (1) nach Anspruch 1, **dadurch gekennzeichnet, dass** eine Verzögerungsvorrichtung, insbesondere mit einer Schaltlogik, vorzugsweise einem anwendungsspezifischen Chip ausgebildet, besonders bevorzugt eine mikrocomputergesteuerte Verzögerungsvorrichtung im Stromkreis der Schaltungsanordnung ausgebildet ist.

3. Schaltungsanordnung (1) nach einem der Ansprüche 1 oder 2, **dadurch gekennzeichnet, dass** die zweite Schaltvorrichtung (7) von der ersten Schaltvorrichtung (5) zwangsgesteuert geschaltet ist.

4. Schaltungsanordnung (1) nach einem der Ansprüche 1 bis 3, **dadurch gekennzeichnet, dass** die erste- (5) und die zweite Schaltvorrichtung (7) mittels eines Ein- und Ausschalters ansteuerbar sind.

5. Schaltungsanordnung (1) nach einem der Ansprüche 1 bis 4, **dadurch gekennzeichnet, dass** mit der Strombegrenzungsvorrichtung der Einfluss auf ein induktives Verhalten der Überbrückungsvorrichtung, insbesondere der ersten Schaltvorrichtung (5) einstellbar ist.

6. Schaltungsanordnung (1) nach einem der Ansprüche 1 bis 5, **dadurch gekennzeichnet, dass** die erste Schaltvorrichtung (5) und/oder zweite Schaltvorrichtung (7) und/oder Strombegrenzungsvorrichtung (3) zum Startermotor (2) als separat anordenbare bauliche Einheit ausgebildet sind.

7. Schaltungsanordnung (1) nach einem der Ansprüche 1 bis 6, **dadurch gekennzeichent, dass** Einschaltverzögerungen durch Wahl von Induktivitäten und der Ohmigkeit der Schaltvorrichtungen (5, 7, 19), die insbesondere als Schaltrelais ausgebildet sind, einstellbar sind.

8. Startvorrichtung (17) zum Starten einer Brennkraftmaschine (15) in einem Kraftfahrzeug, mit einer Schaltungsanordnung (1) nach einem der Ansprüche 1 bis 7 und mit einem Startermotor (2).

## Claims

1. Circuit arrangement (1) for an electrical machine (2), in particular for a starter motor (2) for starting an internal combustion engine (15), in a motor vehicle, with a current limiting device (3) for limiting an initial current of the electrical machine (2),
with a first switching device (5) with a single function, **characterized in that** the single function comprises a switching contact (51) for closing a circuit of the electrical machine (2) with the current limiting device (3),
with a second switching device (7) with dual function, wherein the dual function comprises a circuit switching device and a mechanical single-track device
with a bridging device (4) for bridging the current limiting device (3), which is formed as the circuit switching device of the second switching device (7), wherein the bridging device (4) is switchable directly to a high potential of a voltage source (10).

2. Circuit arrangement (1) according to claim 1, **characterized in that** a delay device, in particular with a switching logic, preferably an application-specific chip, is formed, in particular preferably a microcomputer-controlled delay device, is formed in the circuit of the circuit arrangement.

3. Circuit arrangement (1) according to any one of claims 1 or 2, **characterized in that** the second switching device (7) is forced-controlled by the first switching device (5).

4. Circuit arrangement (1) according to any one of claims 1 to 3, **characterized in that** the first switching device (5) and the second switching device (7) are controllable by means of an on/off switch.

5. Circuit arrangement (1) according to any one of claims 1 to 4, **characterized in that** the influence on an inductive behaviour of the bridging device, in particular of the first switching device (5), is adjustable by means of the current limiting device.

6. Circuit arrangement (1) according to any one of claims 1 to 5, **characterized in that** the first switching device (5) and/or second switching device (7) and/or current limiting device (3) are designed as a separately arrangeable structural unit to the starter motor (2).

7. Circuit arrangement (1) according to any one of claims 1 to 6, **characterized in that** switch-on delays are adjustable by selecting inductances and the ohmicity of the switching devices (5, 7, 19), which are in particular designed as switching relays.

8. Starter device (17) for starting an internal combustion engine (15) in a motor vehicle, comprising a circuit arrangement (1) according to any one of claims 1 to 7 and a starter motor (2).

## Revendications

1. Montage de circuit (1) pour une machine électrique (2), en particulier pour un moteur de démarreur (2) destiné à démarrer un moteur à combustion interne (15), dans un véhicule automobile,
comportant un dispositif limiteur de courant (3) pour limiter un courant de démarrage de la machine électrique (2),
un premier dispositif de commutation (5) ayant une fonction unique,
**caractérisé en ce que** la fonction unique comprend un contact de commutation (51) pour fermer un circuit de courant de la machine électrique (2) avec le dispositif limiteur de courant (3), comportant un second dispositif de commutation (7) ayant une fonction double, la fonction double comprenant un dispositif de commutation limiteur de courant et un dispositif d'engrènement mécanique,
comportant un dispositif de pontage (4) pour ponter le dispositif limiteur de courant (3) qui est formé comme le dispositif de commutation de circuit de courant du second dispositif de commutation (7),
dans lequel le dispositif de pontage (4) peut être directement commuté sur un potentiel élevé d'une source de tension (10) .

2. Montage de circuit (1) selon la revendication 1, **caractérisé en ce qu'**un dispositif de temporisation, en particulier formé avec une logique de commutation, de préférence une puce à application spécifique, de manière particulièrement préférée un dispositif de temporisation piloté par microordinateur, est formé dans le circuit de courant du montage de circuit.

3. Agencement de commutation (1) selon l'une des revendications 1 ou 2, **caractérisé en ce que** le second dispositif de commutation (7) est commuté par le premier dispositif de commutation (5) sous l'action d'une commande forcée.

4. Montage de circuit (1) selon l'une des revendications 1 à 3, **caractérisé en ce que** les premier (5) et second (7) dispositifs de commutation peuvent être commandés au moyen d'un commutateur de marche-arrêt.

5. Montage de circuit (1) selon l'une des revendications 1 à 4, **caractérisé en ce que** l'effet sur un comportement inductif du dispositif de pontage, en particulier du premier dispositif de commutation (5), peut être réglé avec le dispositif limiteur de courant.

6. Montage de circuit (1) selon l'une des revendications 1 à 5, **caractérisé en ce que** le premier dispositif de commutation (5) et/ou le second dispositif de commutation (7) et/ou le dispositif limiteur du courant (3) du moteur de démarreur (2) sont formés comme un bloc structurel pouvant être agencé séparément.

7. Montage de circuit (1) selon l'une des revendications 1 à 6, **caractérisé en ce que** des temporisations de mise sous tension peuvent être réglées en choisissant des inductances ou la résistance ohmique des dispositifs de commutation (5, 7, 19) qui sont en particulier configurés sous forme de relais de commutation.

8. Dispositif de démarrage (17) pour démarrer un moteur à combustion interne (15) dans un véhicule automobile, comportant un montage de circuit (1) selon l'une des revendications 1 à 7 et un moteur de démarreur (2).
